# EUROPEAN PATENT APPLICATION

(11) **EP 3 136 734 A1**
(43) Date of publication of application: **01.03.2017**
(21) Application number: 15306307.8
(22) Date of filing: 24.08.2015
(51) Int. Cl.: H04N 21/242, H04N 21/43, H04N 21/436, H04N 21/44

(54) **METHOD FOR SYNCHRONIZED RENDERING OF AUDIO/VIDEO CONTENT ON A PLURALITY AUDIO/VIDEO RENDERING DEVICES AND CORRESPONDING APPARATUS**

(71) Applicant: Thomson Licensing, 92130 Issy-les-Moulineaux (FR)
(72) Inventor: RIGAL, Renaud, 35576 Cesson-Sévigné Cedex (FR); SEINGIER, François-Xavier, 35576 Cesson-Sévigné Cedex (FR); QUERE, Thierry, 35576 Cesson-Sévigné Cedex (FR)
(74) Representative: Huchet, Anne

(57) **Abstract**

An audio/video receiver receives time stamps from a plurality of other audio/video receivers of last rendered audio/video frames related to a same received audio/video content. Each audio/video receiver of the plurality receiving a time stamp from another audio/video receiver of the plurality related to a same audio/video content it is receiving, compares the received time stamp with its internal system clock, and possibly adjusts its system clock to provide synchronized rendering with the audio/video receiver of the plurality that transmitted the time stamp.

## Description

### 1. Technical field.

The present disclosure generally relates to the field of audio/video rendering and in particular to synchronized rendering of a same audio video stream on multiple audio/video rendering devices.

### 2. Technical background.

Nowadays it is commonplace for households and businesses to have multiple audio/video (AV) rendering devices. For example, a household has have a wide screen television in the living room and a second television in the kitchen, and may wish to tune these devices to a same television channel for viewing a football match broadcasted on a particular channel. A business may have any number of displays in a business building, each showing images of a same news channel. A café or restaurant may have multiple televisions tuned to a same sports event. A vendor of consumer electronics devices may have a number of televisions on display showing same images simultaneously. A consumer electronics manufacturer may have a wall of screens in an exhibitor booth on a tradeshow showing a same content at a same time. For a public event, a video may be shown on a wall of screens, where each individual screen shows a portion of the video. Synchronized rendering is desired for these applications.

A widely used technique for distributing AV content to many AV receivers is multicast over Internet Protocol (IP). However, network latency, network induced jitter and processing latency causes lag between rendering of a same multicast stream by different rendering devices.

If a viewer can observe multiple displays at a same time showing a same content, it is desired to have the multiple displays showing that same content at a same time to avoid disturbing lag between AV rendering. If an auditor is capable of hearing a same content source from multiple audio rendering devices at a same time, it is desired that the multiple audio rendering devices render the audio in a synchronized manner to avoid a disturbing echoing effect.

US 8,707,382B2 to Wollmershauser et al. proposes a prior technique for synchronization of two set-top boxes that display multiple instances of a single multimedia program. Communication between the set-top boxes is required for synchronization, as a local set-top box requests a playpoint from a remote set-top box. The local set-top box then sets a local play point to correspond to the remote set-top box' play point. A master-slave like embodiment allows synchronization of more than two set-top boxes. In the local set-top box, a synchronization application is required, that comprises an arrangement to determine to which frame the local set-top box should lock in order to provide synchronization with the remote set-top box.

There is thus a need to improve prior techniques for a simpler and more flexible synchronization technique, allowing for accurate easy plug-and-play rendering synchronization between two or more receivers.

### 3. Summary.

The present disclosure aims at alleviating some of the inconveniences of prior art.

To this end, the present principles comprise a method for synchronized rendering of at least part of a same audio/video content via a plurality of audio/video receiver devices receiving the at least part of a same audio/video content. The method is implemented by a first audio/video receiver device among the plurality. The method comprises: receiving the at least part of a same audio/video content; receiving at least one time stamp, transmitted by at least one second audio/video receiver device among the plurality, the time stamp corresponding to a time reference of a last audio/video frame rendered by the at least one second audio/video receiver device; and synchronizing a rendering of the received at least part of the same audio/video content by setting a System Time Clock value of the first audio/video receiver device to a value of the received at least one time stamp if the System Time Clock value is in advance of the received at least one time stamp.

According to a variant embodiment, the method further comprises transmission of a time stamp of a last audio/video frame rendered by the first audio/video receiver device and destined to the plurality of audio/video receiver devices.

According to a variant embodiment of the method the transmission is on a same multicast address and on a different port number as on which the first audio/video receiver device receives the at least part of a same audio/video content.

According to a variant embodiment of the method the setting of the System Time clock of the first audio/video receiver device to the received at least one time stamp is done progressively, to reach the value of the received at least one time stamp after a fixed delay.

According to a variant embodiment of the method the setting of the System Time clock of the first audio/video receiver device to the received at least one time stamp is done progressively, to reach the value of the received at least one time stamp after a delay of a duration that is related to a magnitude of difference between the System Time Clock value and the value of the received at least one time stamp.

According to a variant embodiment of the method, the method further comprises, upon reception of one of the at least one time stamp, starting of a wait period and storing in memory of the one of the at least one time stamp if the System Time Clock is in advance of the one of the at least one time stamp; replacing the stored time stamp if during the wait period a time stamp is received that has a lower value than the time stamp stored in memory; and at the end of the wait period, using the stored time stamp for synchronizing.

According to a variant embodiment of the method, an offset value is added to the stored time stamp before using the stored time stamp for the synchronizing, the offset value corresponding to a difference between System Time Clock value at the end of the wait period and System Time Clock value at the time of receipt of the stored time stamp.

The present disclosure also relates to an audio/video receiver device for synchronized rendering of at least part of a same audio/video content via a plurality of audio/video receiver devices receiving the at least part of a same audio/video content. The audio/video receiver device comprises a memory, a network interface and a processor. The network interface is configured to receive the at least part of a same audio/video content, and to receive at least one time stamp, transmitted by at least one second audio/video receiver device among the plurality, the time stamp corresponding to a time reference of a last audio/video frame rendered by the at least one second audio/video receiver device. The processor is configured to synchronize a rendering of the received at least part of the same audio/video content by setting a System Time Clock value of the audio/video receiver device to a value of the received at least one time stamp if the System Time Clock value is in advance of the received at least one time stamp.

According to a variant embodiment of the audio/video receiver device, the network interface is further configured to transmit a time stamp of a last audio/video frame rendered by the audio/video receiver device and destined to the plurality of audio/video receiver devices.

According to a variant embodiment of the audio/video receiver device, the network interface is further configured to transmit on a same multicast address and on a different port number as on which the audio/video receiver device receives the at least part of a same audio/video content.

According to a variant embodiment of the audio/video receiver device, the processor is further configured to progressively set the System Time clock of the audio/video receiver device to the received at least one time stamp, to reach the value of the received at least one time stamp after a fixed delay.

According to a variant embodiment of the audio/video receiver device, the processor is further configured to progressively set the System Time clock of the audio/video receiver device to the received at least one time stamp, to reach the value of the received at least one time stamp after a delay of a duration that is related to a magnitude of difference between the System Time Clock value and the value of the received at least one time stamp.

According to a variant embodiment of the audio/video receiver device, the processor is further configured to start a wait period upon reception of one of at least one time stamp, and store in the memory the one of the at least one time stamp if the System Time Clock is in advance of the one of the at least one time stamp; replacing the stored time stamp if during the wait period a time stamp is received that has a lower value than the time stamp stored in the memory; and at the end of the wait period, use the time stamp stored in the memory for synchronizing.

According to a variant embodiment of the audio/video receiver device, the processor is further configured to add an offset value to the time stamp stored in the memory before using the time stamp stored in the memory for the synchronizing, the offset value corresponding to a difference between System Time Clock value at the end of the wait period and System Time Clock value at the time of receipt of the time stamp stored in the memory.

### 4. List of figures.

More advantages of the present principles will appear through the description of particular, non-restricting embodiments of the disclosure. In order to describe the manner in which the advantages of the present principles can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring of the disclosure.

The exemplary embodiments will be described with reference to the following figures:
**Figure 1** is a prior technique Internet Protocol AV decoder.
**Figures 2a and 2b** are example hardware environments in which the present principles can be applied.
**Figure 3** is a sequence diagram illustrating a particular embodiment of a method according to the present principles.
**Figure 4** illustrates how these principles advantageously result in automatically converging of AV synchronization between AV receivers that are receiving a same AV content.
**Figure 5** is an example display matrix or "video wall" arrangement wherein the present principles can be advantageously applied.
**Figure 6** is another example use of the display matrix of figure 5.
**Figure 7** is a hardware embodiment suited for implementing the present principles.
**Figure 8** is another example hardware embodiment suited for implementing the present principles.
**Figure 9** is a flow chart of an embodiment of a method according to the present principles.

### 5. Detailed description.

In the following, the acronym AV or the term audio/video is used, meaning audio alone, video alone, or video combined with audio.

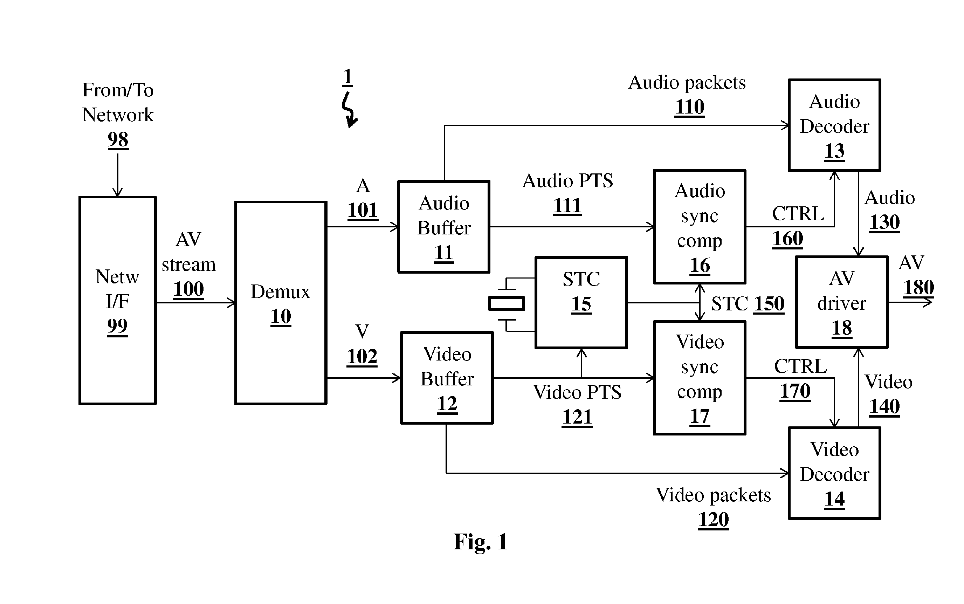

**Figure 1** is a prior technique IP AV decoder, such as comprised in an AV receiver such as an IP Set-Top Box. Via network interface **99**, IP AV decoder **1** receives an AV stream **100** from an AV encoder (not shown) connected to an IP network **98**. AV stream **100** is demultiplexed in a demultiplexer **10**, which extracts packets comprised in the AV stream and outputs audio related packets **101**, and video related packets **102**. Audio packets are fed to an Audio buffer **11**; video packets are fed to a video buffer **12**; at the output of the video buffer, video Presentation Time Stamps (PTS) packets are provided to System Time Clock (STC) **15**. The STC is a clock that is internal to the decoder **1**. It is a counter that is typically incremented with a frequency that is the same as the encoder clock. For synchronization of the decoder clock with the encoder clock, the STC is initialized with the value of a video PTS **121**. Program Clock Reference (PCR) packets comprised in the stream are used for this purpose in decoders with a front-end, for example in the case of a decoder with a tuner front-end for use in a satellite- or digital terrestrial television (DTT) delivery network. However PCR packets are not used for synchronization in IP decoders because of transport jitter in the IP delivery network. STC **15** outputs STC counter values **150**. From the audio buffer **11**, audio packets **110** are input to audio decoder **13**. From the video buffer **12**, video packets are input to the video decoder **14**. Further from audio buffer **11**, audio PTS are input to audio sync comparator **16**. Further from video buffer **12**, video PTS are input to a video sync comparator **17**. Audio and video PTS are timing packets that comprise time stamps values that are related to the PCR, and that indicate at what value of PCR audio or video packets that follow PTS in the AV stream are to be presented (or "rendered"). The values from the STC are input to an audio sync comparator **16** and to a video sync comparator **17**. The audio sync comparator compares the received audio PTS with the STC values. If a received audio PTS is equal to an STC value, it outputs a control signal **160** to the audio decoder **13**, which then decodes the next audio packet **110**, and outputs decoded audio **130**. For video, this is the same; the video sync comparator compares the received video PTS with the STC values. If a received video PTS is equal to an STC value, it outputs a control signal **160** to the video decoder **14**, which then decodes the next video packet **120**, and outputs decoded video **140**. An audio/video driver **18** converts, amplifies and adapts audio/video to be presented on an AV output **180**. Optionally the decoder **1** comprises a user interface (not shown) for receiving user commands from for example a tactile screen, a mouse, a keyboard, and/or a remote control.

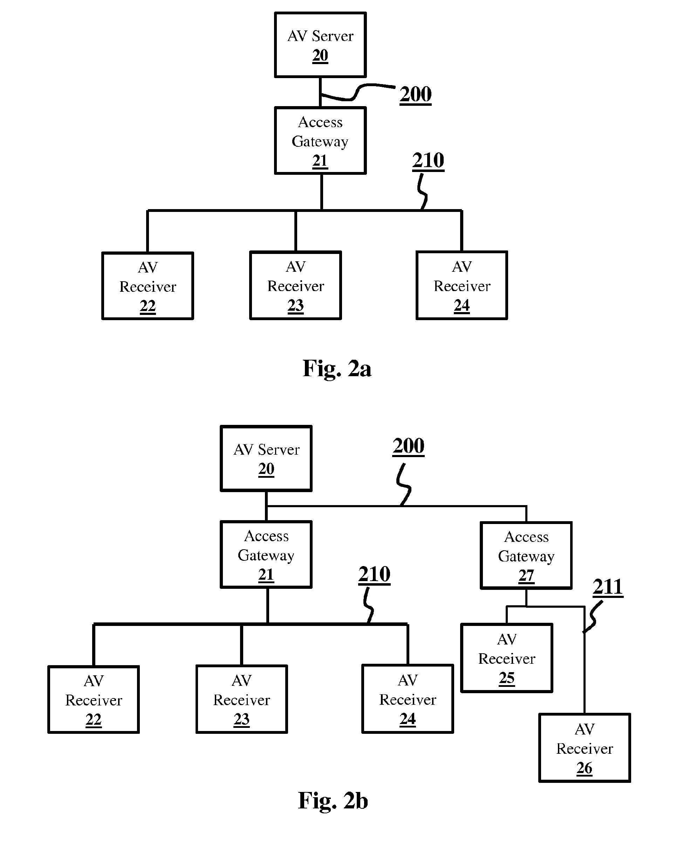

**Figure 2a** is an example hardware environment in which the present principles can be applied. The environment comprises an audio/video server **20**, capable of transmitting audio/video content; an IP WAN **200** (Wide Area Network), an access gateway **21**, an IP LAN **210** (Local Area Network), and three audio/video receiver devices **22**, **23** and **24**. Access gateway **21** provides audio/video receiver devices **12-14** with access to audio/video server **200** on the WAN **200**, while access gateway **21** also provides devices **22-24** access to each other via LAN **210**. Each of the audio/video receiver devices **22-24** can request an audio/video content from audio/video server **20**, receive the requested audio/video content, decode it, and render decoded audio/video on an internal or external audio video and/or video rendering device (e.g. a loudspeaker and/or a display) (not shown). According to this example hardware environment, synchronization is done according to the present principles between AV receiver devices connected in a same LAN **210**. The present principles are not limited to synchronizing the rendering of AV receiver devices in a same LAN.

**Figure 2b** is another example hardware environment in which the present principles can be applied. The rendering of any of the AV receivers **22-26** in same or different LANs can be synchronized according to the present principles, e.g. the rendering of AV receiver **22** can be synchronized with that of AV receiver **25** or **26**, which is connected to a different gateway device **27** in a different LAN **211**.

Other hardware environments than illustrated in figures 2a and 2b are compatible with the present principles, such as a network with a DSLAM (Digital Subscriber Line Access Multiplexer), with one or more network switches or networks without gateways.

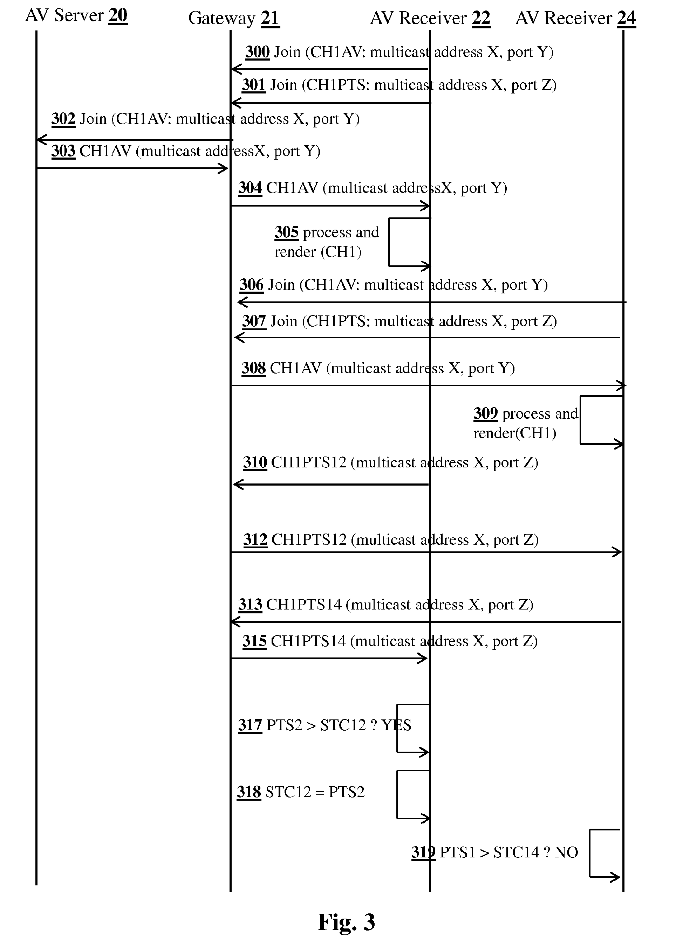

**Figure 3** is a sequence diagram illustrating a particular embodiment of a method according to the present principles with the help of a use case. According to this use case, a first AV receiver selects an AV channel for receiving an AV content, followed by a second AV receiver that selects the same AV channel, and both AV receivers synchronize rendering of AV content from the selected AV channel. From left to right are illustrated AV server **20**; gateway **21**; AV receiver **22** and AV receiver **24**. Gateway **21** comprises a function of IP multicast network switch. The diagram starts with AV receiver **22** transmitting a multicast join request for joining a multicast group with address X and port number Y that corresponds to a multicast address and port number of a given channel CH1, reference **300**. This is for example following a P+ or P- channel change command from a user via a remote control. Following the multicast join request **300**, AV receiver **22** transmits a multicast join request **301** to a multicast group with address X and port number Z, that corresponds to a multicast address and port number for reception of PTSes of last rendered AV frames of channel CH1, transmitted by any other AV receiver for synchronization purposes. This PTS transmission is in addition to PTS present in the AV stream; the additional PTS transmission can be seen as using a separate transmission channel, where the term "separate channel" is used to indicate that the transmission of PTS of last rendered AV frames is not in the AV stream. The join requests are received by gateway **21**, that subscribes AV receiver **22** to the respective multicast groups and that forwards request **300** to AV server **20**, reference **302**. AV server **20** subscribes gateway **21** to a multicast group for reception of an AV stream corresponding to channel CH1 and transmits, reference **303**, the requested channel as a multicast AV stream to the multicast group. As gateway **21** subscribed to this multicast group, the multicast AV stream transmitted by AV server **20** is received by gateway **21**. As AV receiver **22** subscribed to the multicast group, the latter forwards the multicast AV stream to AV receiver **22**, reference **304**. AV receiver **22** receives the multicast AV stream, processes it and renders audible/visible the AV content comprised in the AV stream, reference **305**. Processing of the AV stream comprises receiving of the multicast stream packets, storing the received packets in a stream buffer memory(-ies), and AV decoding of the packets at the output of the stream buffer memory(-ies). Then, AV receiver **24** in turn transmits to gateway **21** a multicast join request for joining the multicast group with address X and port number Y that corresponds to an AV stream from channel CH1, reference **306**. Following the multicast join request **306,** AV receiver **24** transmits a multicast join request **307** to join the multicast group with address X, port number Z, for reception of PTSes of last rendered AV frames, transmitted by any other AV receiver for synchronization purposes. Upon receipt of multicast group join request **306**, gateway **21** subscribes AV receiver **24** to the multicast group corresponding to the AV stream for channel CH1 and transmits, reference **308**, the same multicast AV stream that is also transmitted to AV receiver **22** to AV receiver **24**. AV receiver **24** receives the multicast AV stream, processes it and renders audible/visible the AV content comprised in the AV stream, reference **309**. AV receiver **22** transmits, reference **310**, to the multicast group with address X and port number Z, information related to the Presentation Time Stamp PTS12 of a last AV frame rendered by AV receiver **22**. Gateway **21** replicates this information, reference **312**, to the subscribers to the multicast group (AV receivers **22** and **24**). AV receiver **24** in turn transmits information related to the Presentation Time Stamp PTS14 of a last AV frame rendered by AV receiver **24** to multicast group address X port Z for PTS related information corresponding to channel CH1, reference **313**, which is replicated by gateway **21** to the subscribers to this multicast group, AV receiver **22**, reference **315**.

Each of the AV receivers **22** and **24** have subscribed to multicast group with address X and port number Z and thus receive the Presentation Time Stamps transmitted to this multicast group by each of the AV receivers **22** and **24**. Each of the AV receivers **22** and **24** compare the time information comprised in the received PTSes to their internal System Time Clock (STC), and adjust their STC if required. According to the present principles, the AV receiver that is the one that is lagging furthest behind in the AV rendering process is synchronized upon.

In the above example embodiment, Presentation Time Stamps are used for reference to last rendered AV frames. Presentation Time Stamps are used in MPEG streams. PTS are notably used in DVB (Digital Video Broadcasting), ATSC (Advanced Television Systems Committee) and ARIB (Association of Radio Industries and Businesses). We refer to "timestamp of a last rendered frame" to comprise all possible implementations. In practice, the "last rendered frame" is often an image frame of a video when the AV content comprises audio and video, or the last rendered frame is an audio frame when the AV content is audio only.

According to the present principles:
- AV receivers transmit time stamps of last rendered frames of a selected AV channel on a separate channel, e.g. to a multicast group with the same multicast address as that of the AV stream of the selected AV channel, but with a given port number that is different than the port number of the multicast group of the AV stream;
- AV receivers set up reception of time stamps of last rendered frames of a selected AV channel, e.g. they subscribe to the above multicast group for distribution of time stamp information of last rendered frames, in addition to subscribing to the multicast group for distribution of the AV stream of the selected AV channel;
- An AV receiver that receives a time stamp of a last rendered frame, transmitted by another AV receiver and related to the selected AV channel, e.g. from the above multicast group for distribution of time stamp of last rendered video frames related to the selected AV channel, verifies according to the following principles that:
   1). if its STC is late with regard to the received time stamp of a last rendered frame, no STC adjustment is done, as it may be the AV receiver that the other AV receivers will need to synchronize with, i.e. it may be the one that is lagging furthest behind;
   2). if its STC is equal to the received time stamp of a last rendered frame no STC adjustment is done, as the AV receiver receiving the time stamp of the last rendered frame is already synchronous with the AV receiver transmitting the time stamp of the last rendered frame;
   3). if its STC is in advance to the received time stamp of the last rendered frame, it sets its STC to the received time stamp of the last rendered frame, which synchronizes the AV rendering of the first AV receiver with the AV rendering of the AV receiver that transmitted the received time stamp of the last rendered frame.

The present principles result in synchronization of a plurality of AV receivers rendering a same AV content as it results in synchronization of STCs of the plurality of receivers. As explained previously, the STC is used as a reference clock in an AV receiver to synchronize the decoding and rendering of audio and video with the encoder. Decoding and rendering of audio/video are thus synchronized if the plurality of receivers implementing the present principles thus have set their STC to a same value.

Though the above described STC adjustment is fast, it can create visible/audible artefacts, resulting in visible image jumps, macroblocks and/or audio/video glitches, depending on the nature of audio/video sequence and on a difference between a current STC value and that of the received time stamp of a last rendered frame. To avoid audio glitches, audio can be muted during the STC adjustment.

According to an advantageous variant embodiment, the above described STC adjustment is done progressively to reach at the end of the fixed delay the value of the received time stamp of a last rendered frame, in order to avoid the above described artefacts.

According to a variant embodiment, the STC is adjusted progressively within a fixed delay, e.g. 500ms, or 1 or 2 seconds. However, if a difference between a current STC value and the received time stamp of a last rendered frame is important and the fixed delay is short, such progressive adjustment will still create visible artefacts.

Therefore, according to a further advantageous variant embodiment, the STC is adjusted with a variable delay, e.g. from 500ms to 3s, to reach at the end of the variable delay the value of the received time stamp of a last rendered frame. According to this variant embodiment, the STC adjustment delay is chosen according to a magnitude of the difference between the current STC value and the value of the received time stamp of a last rendered frame.

According to a further advantageous embodiment, if an AV receiver receives a first time stamp of a last rendered frame received from another AV receiver, and if according to principle 3) above the STC of the AV receiver is in advance of the received time stamp of a last rendered frame, the STC is not adjusted immediately; a wait period is started, in which the AV receiver waits for other time stamp of a last rendered frame from other receivers, in order to avoid stepwise synchronization if multiple AV receivers transmit different time stamps of last rendered frames that each have different values that are lower than the AV receiver's STC. According to this embodiment, the AV receiver waits for the wait period after having received a first time stamp of a last rendered frame from another AV receiver which is lower than the AV receiver's own STC value, and memorizes the lowest time stamp of a last rendered frame value received during the wait period that is lower than its own STC. Then, at the end of the wait period, the stored time stamp of a last rendered frame value is used to adjust the STC;

According to a variant embodiment, an offset equal to the difference between STC value at the end of the wait period and the STC value at the time of receipt of the stored time stamp of a last rendered frame value is added to the stored time stamp of a last rendered frame value in order to take into account time elapsed since the receipt of the stored time stamp of a last rendered frame value and avoid creating a lag introduced by the time elapsed between receipt of the stored time stamp of a last rendered frame value and its use.

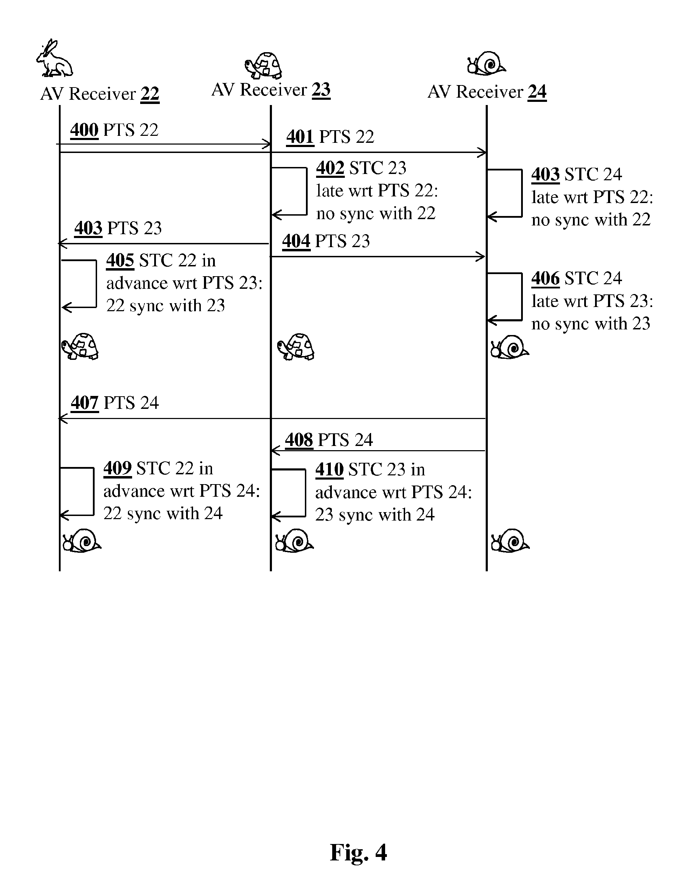

**Figure 4** illustrates how these principles advantageously result in automatically converging of AV synchronization between AV receivers that are receiving a same AV content, whereby the AV synchronization automatically converges to the AV receiver that is lagging the furthest behind. Three AV receivers **22**, **23** and **24** receive a same AV content. AV receiver **22** is the AV receiver that is farthest in advance in rendering AV frames from the AV content, whereas AV receiver **23** is lagging behind AV receiver **22** and AV receiver **24** is lagging behind AV receiver **23**. Each of the AV receivers receives time stamps of a last rendered frames transmitted by the other AV receivers. AV receivers **23** and **24** receive a time stamp of a last rendered frame transmitted by AV receiver **22**, references **400** and **401**. Each of the AV receivers **23** and **24** compare their STC with the time stamp of a last rendered frame received, and conclude that their STC is late with regard to the received time stamp of a last rendered frame. According to principle 1) above, no synchronization is done by AV receivers **23** and **24**, references **402** and **403**. Then, AV receiver **22** receives a time stamp of a last rendered frame transmitted by AV receiver **23**, reference **403**. According to principle 3) above, AV receiver **22** synchronizes with AV receiver **23**, reference **405.** AV receiver **24** also receives the time stamp of a last rendered frame transmitted by AV receiver **23**, reference **404**. According to principle 1) no synchronization is done by AV receiver **24*,*** reference **406*.*** Then AV receivers **22** and **23** receive a time stamp of a last rendered frame from AV receiver **24**, reference **407** and **408**. According to principle 3), AV receivers **22** and **23** will synchronize with AV receiver **24.** All AV receivers **22**, **23** and **24** are now synchronized, where AV receivers **22** and **23** have synchronized with AV receiver **24**.

The reader will understand that the time stamps of a last rendered frames received are not necessarily received in the described order.

Advantageously, these principles allow for in a flexible "plug-and-play" synchronization system, where AV receivers can freely join and leave a synchronized group of AV receivers while automatic AV resynchronization is ensured. These and other advantages are explained with a further example. Two AV receivers **22** and **23** are receiving a same television channel and are synchronized with each other. A third AV receiver **24** is tuned to a different television channel. When AV receiver **24** changes to the channel received by AV receivers **22** and **23**, AV receiver **24** will synchronize with the other receivers **12** and **13** if principle 3) applies to AV receiver **24** (i.e. AV receiver **24** is in advance of AV receivers **22** and **23**), AV receiver **24** will not synchronize if principle 2) applies to **24** (i.e. AV receiver **24** is already synchronized with AV receivers **22** and **23**), or AV receivers **22** and **23** will synchronize with AV receiver **24** if principle 3) applies to AV receivers **22** and **23** (i.e. AV receiver **24** is late with regard to AV receivers **22** and **23**).

The above principles are explained in a context of multicast distribution of AV content. The present principles are however equally applicable to other AV content distribution techniques. For example, the present principles can be applied to synchronize a mix of at least one multicast IP receiver and at least one satellite receiver receiving a same AV broadcast content, as long as the receivers have a way to communicate between them so that they can transmit and receive time stamps of last rendered frames to each other respectively from each other. Likewise, the present principles equally apply to solutions where time stamps of last rendered frames are not transmitted to other AV receivers via multicast, but for example unicast; though unicast is less advantageous in terms of network bandwidth use and introduces additional problems that are to be solved such as how each AV receiver knows the IP addresses of other AV receivers that are receiving a same AV content.

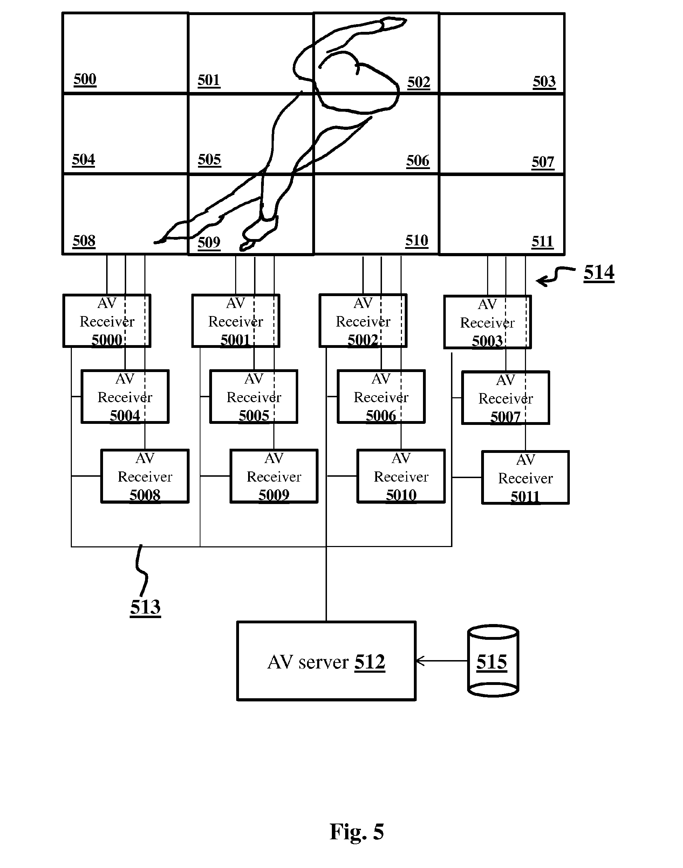

**Figure 5** is an example display matrix or "video wall" arrangement wherein the present principles can be advantageously applied. The arrangement comprises:
- a 3x4 display matrix comprised of twelve displays: **500-511;**
- a set of twelve AV receivers **5000-5011;**
- an AV server **512;**
- a storage device **515**.

AV server **512** provides AV receivers **5000-5011** with AV content from storage device **515** via network **513.** Each of the display devices is connected to a single AV receiver, e.g. display **500** is connected to AV receiver **5000**, and display **511** is connected to AV receiver **5011.** The connection between display devices and AV receivers is made by way of individual connections **514**, for example according to HDMI (High Definition Multimedia Interface). Transmission over network **513** is for example according to multicast IP.

According to a particular embodiment, each of the AV receivers **5000-5011** zooms in on a different part of the video in the AV content provided by AV server **512**, which corresponds to the position in the matrix of the display that is connected to it. The present principles apply for rendering the individual videos in a synchronized way. Each of the AV receivers **5000-5011** receives information, for example from AV server **512** or from a signaling server (not shown) on which part of the video in the AV content each of the AV receivers **5000-5011** is to zoom in on.

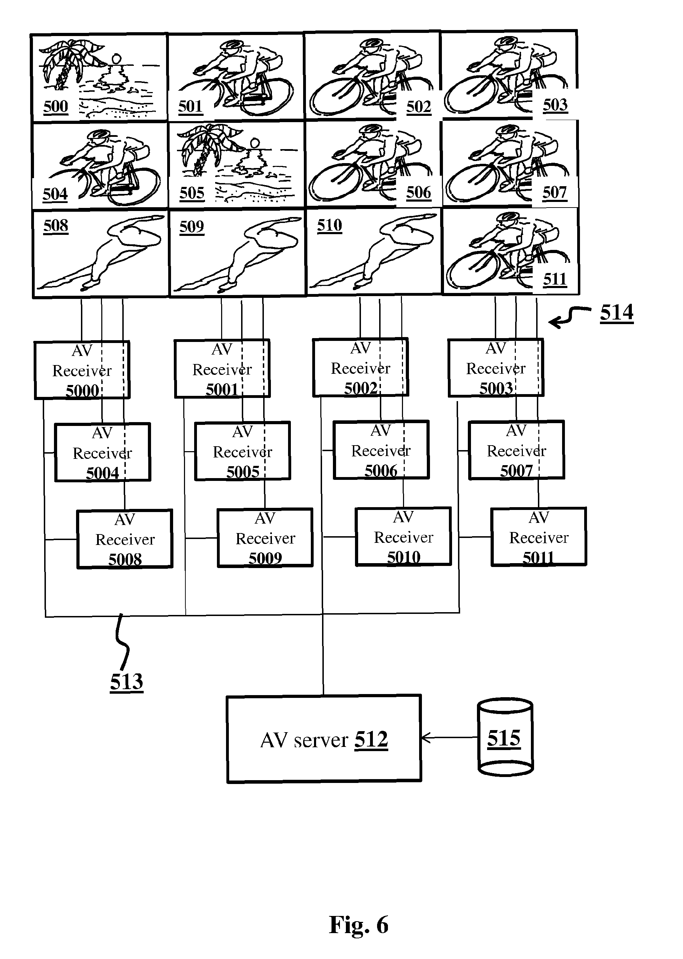

**Figure 6** is another example use of the display matrix of figure 4. Here, each display shows a full video (and not a zoomed in part), and some displays show images from a same video e.g. {**508**-**510**}, {**501**-**507** and **511**}. The present principles apply to the AV receivers that show images from a same video.

The examples of figure 5 and 6 are about video and synchronized rendering of video content. The reader of the present document will however understand that applications of the present principles are various. The present principles equally apply to, for example, audio and synchronized rendering of audio content. For example, the audio rendering of a same audio content via multiple audio receivers, each having an audio rendering device such as a loud speaker, can be synchronized according to the present principles. The present principles can for example also be applied to synchronize audio rendered by one AV receiver with video displayed by a plurality of AV receivers, e.g. one AV receiver renders video and audio from a particular television channel, while other AV receivers render video only from the same television channel, or all AV receivers render synchronized audio and video of the same television channel.

According to previous example embodiments, it is assumed that the transmission delay for transmission of time stamps of last rendered frames between the AV receivers can be neglected. While this is notably the case when all AV receivers are connected to a same network switch, e.g. according to figures 2a, 5 or 6, this is not the case for figure 2b where AV receivers are dispatched over multiple LANs interconnected by a WAN. Therefore, according to an advantageous variant embodiment, an offset value is added to a time stamp of a last rendered frame that corresponds to a transmission delay between the transmitter of a time stamp and the receiver. Such offset is for example determined by measuring the round trip delay of packet transmission between the transmitter and the receiver. Such delay can for example be determined by measuring the delay between the transmission of an IP ping message to the IP address of the transmitter and the reception of the reply. In order for the receiver to obtain the IP address of the transmitter, a time stamp of a last rendered frame is then transmitted in a message that comprises the IP address of the transmitter, and the receiver regularly transmits ping messages to the transmitter's IP address in order to determine the offset value to add to the received time stamp of the last rendered frame.

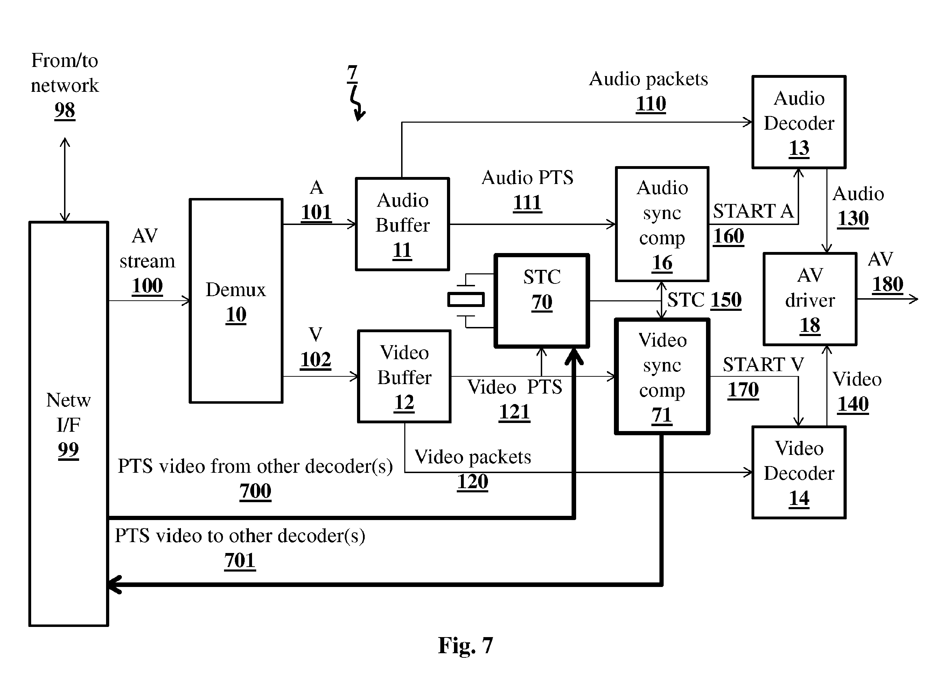

**Figure 7** is an example hardware embodiment implementing the present principles in an IP AV decoder **7**, such as comprised in an IP Set-Top Box. Elements that are in common with figure 1 have the same function unless otherwise stated. Elements drawn with bold lines are related to the present principles. STC 70 receives video PTS packets from video buffer 12, as in figure 1 and uses these to initialize its STC, as described for figure 1. Additionally, STC 70 can receive video PTS packets 700 from other decoders implementing the present principles. If such video PTS 700 of a last rendered image is received from network interface 99, this means that at least one other IP AV decoder implementing the present principles is receiving the same IP AV content stream, and decoder 7 will use this PTS video as described by way of figures 3 and 4 and according to the described principles 1)-3). If no video PTS **700** of a last rendered image is received from network interface **99**, the STC continues to use the video PTS from video buffer **12**. Additionally, the decoder's video sync comparator **71** transmits PTSes of last rendered video packets over the network **98** destined to other IP AV decoders implementing the present principles. STC **70** and video sync comparator **71** are part of the synchronization arrangement according to the present principles. The above example embodiment is that of an audio/video decoder. The reader of the present document will understand that the present principles equally apply to an audio only or video only decoder. For an audio only decoder, the time stamps of last rendered frames transmitted and received are for example audio PTS of last rendered audio frames, and originate from an audio sync comparator.

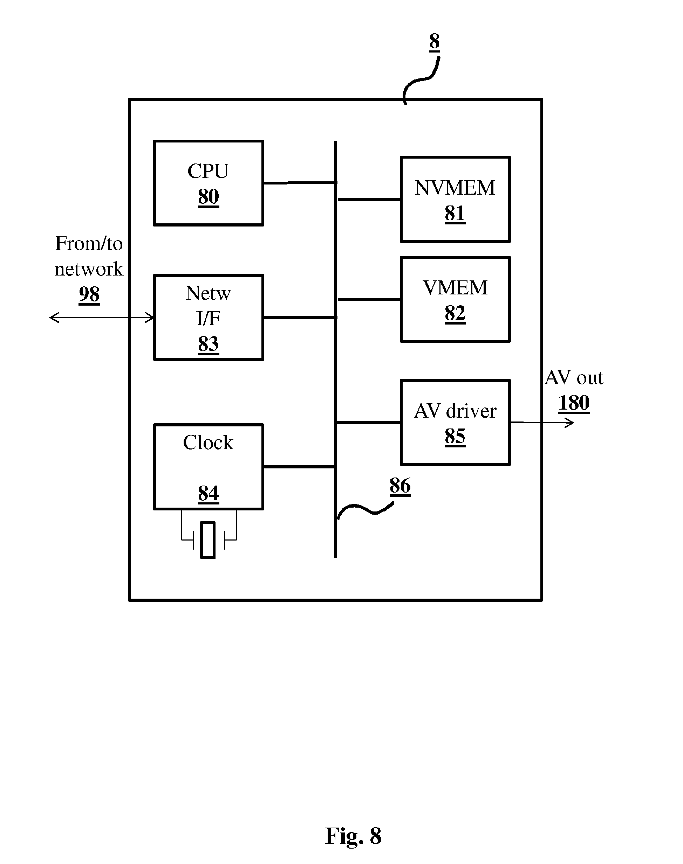

**Figure 8** is another example hardware embodiment suited for implementing the present principles. The IP AV decoder **8** comprises a processor, processing unit or Central Processing Unit (CPU) **80**, a network interface **83**, a clock unit **84**, a non-volatile memory **81** such as a PROM (Programmable Read-Only Memory), a hard disk, or a Solid State Memory (SSD), a volatile memory **82** such as an SDRAM (Synchronous Dynamic Random Access Memory), and an AV driver **85**. Elements **80-85** are interconnected via an internal data and communication bus **86**. Memories **81** and **82** comprise program code instructions that can be executed by processor **80**, and data that comprises parameters, variables and memory buffer zones that are used during the execution of the program code instructions by processor **80**. Network interface **83** provides the decoder **8** with an access to an external data communication network **98**. Clock unit **84** provides the elements **80-83** and **85** with a common clock. Non-volatile memory **81** comprises program code instructions that implement the method according to the present principles. Via network interface **83**, the IP AV decoder **8** receives an AV stream **100** from an AV encoder (not shown), connected to an IP network **98**. The AV stream **100** is demultiplexed by processor **80**, which extracts packets comprised in the AV stream and stores audio/video related packets in audio/video memory buffer zones created for this purpose in volatile memory **82**. Processor **80** also derives an STC counter from the clock signal provided by clock unit **84**. From the audio/video buffers, the processor **80** feeds audio/video packets to a software audio/video decoder comprised in the program code instructions stored in volatile memory **82**. Audio and video PTS from the audio/video buffers are compared by processor **80** to the STC counter values, the result of this comparing deciding when the software decoder needs to decode an audio/video packet. If a PTS packet of a last rendered AV frame is received from another decoder via network interface **83**, the processor **80** compares the received PTS to the STC value and the processor adjusts the STC if required according to the previous described principles 1) 2) and 3). AV driver **85** receives AV data from the software decoder and adapts the AV data for transmission on output **180**. Optionally the decoder **8** comprises a user interface (not shown) for receiving user commands from for example a tactile screen, a mouse, a keyboard, and/or a remote control.

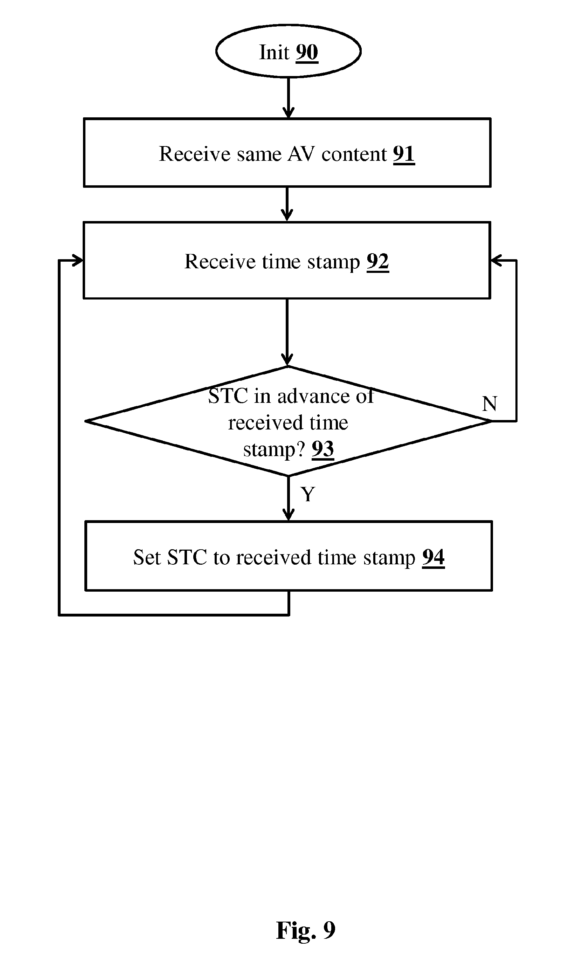

**Figure 9** is a flow chart of an embodiment of a method according to the present principles. In a first step **90**, any variables and memory space are initialized that are used during execution of the method. In a step **91**, at least part of an audio/video content is received, that is the same as at least part of an audio/video content received by a plurality of audio/video receiver devices. In a step **92** at least one time stamp is received that was transmitted by at least one other audio/video receiver device among the plurality, the time stamp corresponding to a time reference of a last audio/video frame rendered by the at least one second audio/video receiver device. In a step **93**, it is verified if the System Time Clock value is in advance of the received at least one time stamp. If so, in a step **94** the rendering of the received at least part of the same audio/video content is synchronized by setting a System Time Clock value of the first audio/video receiver device to a value of the received at least one time stamp, and step **92** is iterated. If not so, step **92** is iterated without any synchronizing step.

Some elements in the drawings may not be used or be necessary in all embodiments. Some operations may be executed in parallel. Variant embodiments other than those illustrated and/or described are possible.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. A method for synchronized rendering of at least part of a same audio/video content via a plurality of audio/video receiver devices receiving said at least part of a same audio/video content, **characterized in that** the method is implemented by a first audio/video receiver device among said plurality and comprising:
receiving (91) said at least part of a same audio/video content;
receiving (92) at least one time stamp, transmitted by at least one second audio/video receiver device among said plurality, said time stamp corresponding to a time reference of a last audio/video frame rendered by said at least one second audio/video receiver device; and
synchronizing a rendering of said received at least part of said same audio/video content by setting (94) a System Time Clock value of said first audio/video receiver device to a value of said received at least one time stamp if (93) said System Time Clock value is in advance of said received at least one time stamp.

2. The method according to claim 1, further comprising transmission of a time stamp of a last audio/video frame rendered by said first audio/video receiver device and destined to said plurality of audio/video receiver devices.

3. The method according to claim 2, wherein said transmission is on a same multicast address and on a different port number as on which said first audio/video receiver device receives said at least part of a same audio/video content.

4. The method according to any of claims 1 to 3, wherein said setting of said System Time clock of said first audio/video receiver device to said received at least one time stamp is done progressively, to reach said value of said received at least one time stamp after a fixed delay.

5. The method according to any of claims 1 to 3, wherein said setting of said System Time clock of said first audio/video receiver device to said received at least one time stamp is done progressively, to reach the value of said received at least one time stamp after a delay of a duration that is related to a magnitude of difference between said System Time Clock value and said value of said received at least one time stamp.

6. The method according to any of claims 1 to 5, further comprising:
upon reception of one of said at least one time stamp, starting of a wait period and storing in memory of said one of said at least one time stamp if said System Time Clock is in advance of said one of said at least one time stamp;
replacing said stored time stamp if during said wait period a time stamp is received that has a lower value than said time stamp stored in memory; and
at the end of said wait period, using the stored time stamp for said synchronizing.

7. The method according to claim 6, wherein an offset value is added to the stored time stamp before using the stored time stamp for said synchronizing, the offset value corresponding to a difference between System Time Clock value at the end of the wait period and System Time Clock value at the time of receipt of the stored time stamp.

8. An audio/video receiver device (7, 8) for synchronized rendering of at least part of a same audio/video content via a plurality of audio/video receiver devices receiving said at least part of a same audio/video content, comprising:
a memory (81,82);
a network interface (83), configured to:
receive said at least part of a same audio/video content;
receive at least one time stamp, transmitted by at least one second audio/video receiver device among said plurality, said time stamp corresponding to a time reference of a last audio/video frame rendered by said at least one second audio/video receiver device; and
a processor (80), configured to synchronize a rendering of said received at least part of said same audio/video content by setting a System Time Clock value of said audio/video receiver device to a value of said received at least one time stamp if said System Time Clock value is in advance of said received at least one time stamp.

9. The audio/video receiver device according to claim 8, wherein said network interface is further configured to transmit a time stamp of a last audio/video frame rendered by said audio/video receiver device and destined to said plurality of audio/video receiver devices.

10. The audio/video receiver device according to claim 9, wherein said network interface is further configured to transmit on a same multicast address and on a different port number as on which said audio/video receiver device receives said at least part of a same audio/video content.

11. The audio/video receiver device according to any of claims 8 to 10, wherein said processor is further configured to progressively set said System Time clock of said audio/video receiver device to said received at least one time stamp, to reach said value of said received at least one time stamp after a fixed delay.

12. The audio/video receiver device according to any of claims 8 to 10, wherein said processor is further configured to progressively set said System Time clock of said audio/video receiver device to said received at least one time stamp, to reach the value of said received at least one time stamp after a delay of a duration that is related to a magnitude of difference between said System Time Clock value and said value of said received at least one time stamp.

13. The audio/video receiver device according to any of claims 8 to 12, wherein said processor is further configured to:
upon reception of one of at least one time stamp, start a wait period and store in said memory said one of said at least one time stamp if said System Time Clock is in advance of said one of said at least one time stamp;
replacing said stored time stamp if during said wait period a time stamp is received that has a lower value than said time stamp stored in said memory;
at the end of said wait period, use the time stamp stored in said memory for said synchronizing.

14. The audio/video receiver device according to claim 13, wherein said processor is further configured to add an offset value to the time stamp stored in said memory before using the time stamp stored in said memory for said synchronizing, the offset value corresponding to a difference between System Time Clock value at the end of the wait period and System Time Clock value at the time of receipt of the time stamp stored in said memory.
